# EUROPÄISCHE PATENTANMELDUNG

(11) **EP 1 326 224 A2**
(43) Veröffentlichungstag der Anmeldung: **09.07.2003**
(21) Anmeldenummer: 02026439.6
(22) Anmeldetag: 27.11.2002
(51) Int. Cl.: G09G 3/28

(54) **Verfahren und Vorrichtung zur Kompensation der unterschiedlichen Anstiegs- und Abfallzeiten der Leuchtstoffe in einem Plasmadisplay**

(30) Priorität: 12.12.2001 DE 10160841
(71) Anmelder: Grundig AG, 90471 Nürnberg (DE)
(72) Erfinder: Fischbeck, Udo, 90766 Fürth (DE)

(57) **Zusammenfassung**

Die Erfindung betrifft ein Verfahren und eine Vorrichtung zur Kompensation der unterschiedlichen Anstiegs- und Abfallzeiten der Leuchtstoffe in einem Plasmadisplay. Dieses weist eine Vielzahl von matrixförmig angeordneten Bildpunkten auf. Jedem Bildpunkt ist eine grüne, eine rote und eine blaue Leuchtstoffzelle zugeordnet. Ein Leuchten eines Bildpunktes wird dadurch herbeigeführt, dass in einem ersten Schritt die dem Bildpunkt zugeordneten Leuchtstoffzellen initialisiert und in einem zweiten Schritt durch Anlegen einer Spannung an die Steuerelektroden der jeweiligen Zelle zum Leuchten gebracht wird. Die Leuchtzeitintervalle der Leuchtstoffzellen eines Bildpunktes werden durch Anlegen von dritten Spannungen an die Adresselektroden der Leuchtstoffzellen in Übereinstimmung gebracht, so dass beim Vorliegen bewegter Bildszenen keine Farbsäume auftreten.

## Beschreibung

Die Erfindung betrifft ein Verfahren und eine Vorrichtung zur Kompensation der unterschiedlichen Anstiegs- und Abfallzeiten der Leuchtstoffe in einem Plasmadisplay, welches eine Vielzahl von matrixförmig angeordneten Bildpunkten aufweist, wobei jedem dieser Bildpunkte eine grüne, eine rote und eine blaue Leuchtstoffzelle zugeordnet ist und ein Leuchten eines Bildpunktes dadurch herbeigeführt wird, dass in einem ersten Schritt die dem Bildpunkt zugeordneten Leuchtstoffzellen jeweils durch Anlegen einer ersten Spannung an die Adresselektroden der Leuchtstoffzellen initialisiert und in einem zweiten Schritt die Leuchtstoffzellen jeweils durch Anlegen einer zweiten Spannung an die Steuerelektroden der Leuchtstoffzellen zum Leuchten gebracht werden.

Plasmadisplays sind bereits bekannt. Deren Aufbau und Funktionsweise sind beispielsweise in dem Aufsatz "Plasma-Displays in Fernseh- und Multimedia-Endgeräten" von H. Kraus, veröffentlicht in der Zeitschrift FERNSEH- UND KINO-TECHNIK, 52. Jahrgang, Nr. 11/1998, Seiten 662 - 668, beschrieben. Das dort gezeigte Plasmadisplay besteht aus zwei parallelen Glasflächen, deren Zwischenraum mit einem Edelgasgemisch gefüllt ist. Die Frontscheibe des Displays ist innen mit transparenten Steuerelektroden benetzt. In den Zwischenräumen befinden sich Abstandsstreifen und darüber eine Schutzschicht. Die hintere Scheibe trägt die Adresselektroden und für jeden Pixel eine rote, eine grüne und eine blaue Leuchtstoffschicht, die durch dünne Stege getrennt sind. Der Aufbau eines Pixels besteht folglich immer aus drei Farbstoffzellen. Mittels einer Ansteuerelektronik kann an die Adresselektroden und über X- und Y-Busleitungen Spannung an die Elektroden einer jeden einzelnen Zelle angelegt werden. Die Adresselektrode dient zum Vorinitialisieren einer Zelle, die im nächsten Zyklus leuchten soll. Eine nicht adressierte Zelle bleibt im folgenden Zyklus dunkel. Die an den Busleitungen anliegende Spannung löst die elektrische Oberflächenentladung auf der Isolierschicht aus. Dabei geht das Gas in den Plasmazustand über, um UV-Licht zu erzeugen, das die Phosphorschicht der einzelnen Zellen zum Leuchten bringt. Die X- und Y-Busleitungen laufen horizontal und sprechen immer eine ganze Zeile an. Dabei sind die Y-Busleitungen einzeln selektierbar, was für die Initialisierung notwendig ist. Die X-Busleitungen haben einen gemeinsamen Punkt.

Da bei einem Plasmadisplay die verschiedenen Leuchtstoffe unterschiedliche Anstiegs- und Abfallzeiten haben, treten bei bewegten Bildern Farbsäume auf.

Die Aufgabe der Erfindung besteht darin, einen Weg aufzuzeigen, wie bei einem Plasmadisplay bei einer Wiedergabe bewegter Bilder ein Auftreten von Farbsäumen vermieden werden kann.

Diese Aufgabe wird durch ein Verfahren mit den im Anspruch 1 und eine Vorrichtung mit den im Anspruch 5 angegebenen Merkmalen gelöst. Vorteilhafte Ausgestaltungen und Weiterbildungen ergeben sich aus den abhängigen Ansprüchen.

Die Vorteile der Erfindung bestehen insbesondere darin, dass die mittels eines Plasmadisplays wiedergegebenen Bilder eine höhere Bildqualität aufweisen, da bei bewegten Bildern keine Farbsäume auftreten.

Weitere vorteilhafte Eigenschaften der Erfindung ergeben sich aus deren nachfolgender Erläuterung anhand des in den Figuren gezeigten Ausführungsbeispiels. Es zeigt:
- Figur 1: eine vereinfachte Darstellung der einem Bildpunkt des Plasmadisplays zugehörigen Leuchtstoffzellen und deren Ansteuerelektronik,
- Figur 2: Skizzen zur Veranschaulichung der unterschiedlichen Anstiegs- und Abfallzeiten der Leuchtstoffe eines Plasmadisplays und
- Figur 3: ein Zeitdiagramm zur Erläuterung der erfindungsgemäßen Ansteuerung einer Leuchtstoffzelle.

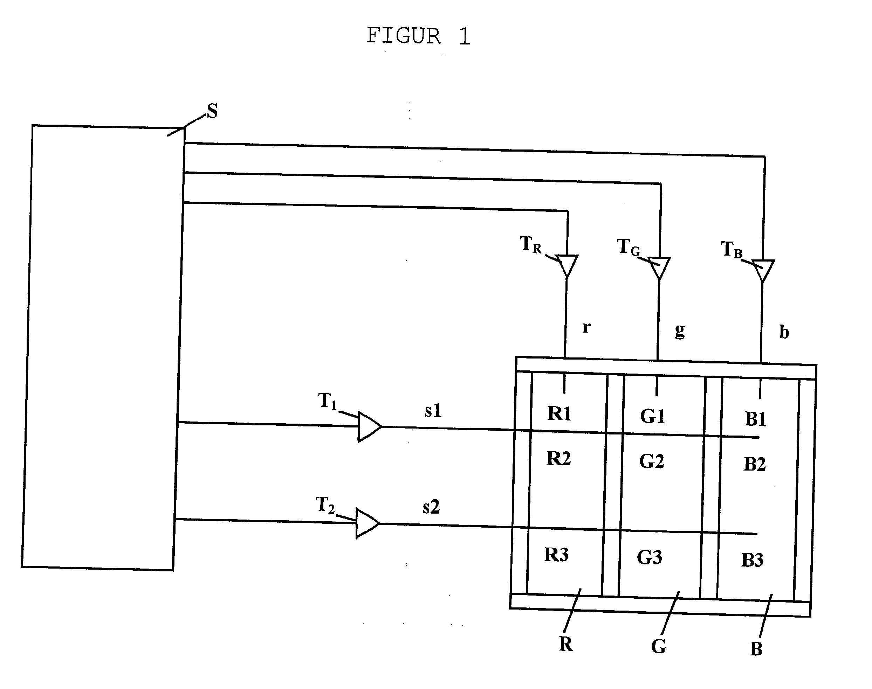

Ein Plasmadisplay weist eine Vielzahl von matrixförmig angeordneten Bildpunkten auf. Jedem dieser Bildpunkte ist eine grüne, eine rote und eine blaue Leuchtstoffzelle zugeordnet. Soll während des Betriebs des Displays ein Bildpunkt aufleuchten, dann werden die diesem Bildpunkt zugehörigen Leuchtstoffzellen von einer Ansteuerelektronik angesteuert, wie im folgenden anhand der Figur 1 erläutert wird.

Diese zeigt eine vereinfachte Darstellung der einem Bildpunkt eines Plasmadisplays zugehörigen Leuchtstoffzellen und deren Ansteuerelektronik. Die einem Bildpunkt zugehörigen Leuchtstoffzellen sind in der Figur 1 mit den Buchstaben R, G und B bezeichnet.

Die Leuchtstoffzelle R enthält eine Adresselektrode R1, eine Elektrode R2, die - wie unten noch erläutert wird - als weitere Adresselektrode und als Steuerelektrode verwendet wird, und eine weitere Steuerelektrode R3.

Die Leuchtstoffzelle G enthält eine Adresselektrode G1, eine Elektrode G2, die - wie unten noch erläutert wird - als weitere Adresselektrode und als Steuerelektrode verwendet wird, und eine weitere Steuerelektrode G3.

Die Leuchtstoffzelle B enthält eine Adresselektrode B1, eine Elektrode B2, die - wie unten noch erläutert wird - als weitere Adresselektrode und als Steuerelektrode verwendet wird, und eine weitere Steuerelektrode B3.

Die Ansteuerung der Leuchtstoffzellen erfolgt durch eine Ansteuerelektronik, die eine Steuereinheit S sowie Treiber T_{R}, T_{G}, T_{B}, T₁ und T₂ aufweist. Der Treiber T_{R} stellt einen Adressimpuls r für die Leuchtstoffzelle R, der Treiber T_{G} einen Adressimpuls g für die Leuchtstoffzelle G und der Treiber T_{B} einen Adressimpuls b für die Leuchtstoffzelle B zur Verfügung.

Der Treiber T₁ ist zur Erzeugung eines für die Leuchtstoffzellen R, G und B gemeinsamen Adressimpulses und zur Erzeugung eines Steuersignals s1 vorgesehen, welches aus mehreren aufeinanderfolgenden Impulssignalen besteht. Diese Signale werden der Adress- und Steuerelektrode R2 der Leuchtstoffzelle R, der Adress- und Steuerelektrode G2 der Leuchtstoffzelle G und der Adress- und Steuerelektrode B2 der Leuchtstoffzelle B zugeführt.

Der Treiber T₂ ist zur Erzeugung eines Steuersignals s2 vorgesehen. Dieses wird an die Steuerelektrode R3 der Leuchtstoffzelle R, die Steuerelektrode G3 der Leuchtstoffzelle G und die Steuerelektrode B3 der Leuchtstoffzelle B angelegt.

Soll der Bildpunkt, dem die Leuchtstoffzellen R, G und B zugeordnet sind, aufleuchten, dann werden in einem ersten Schritt diese Leuchtstoffzellen jeweils durch Anlegen einer ersten Spannung, vorzugsweise eines Adressimpulses, an die Adresselektroden R1, G1 und B1 sowie R2, G2 und B2 initialisiert. Durch diese Initialisierung wird im jeweiligen Kreuzungspunkt, d. h. in der jeweiligen Zelle, eine Oberflächrihladun abgelegt.

In einem zweiten Schritt werden die Leuchtstoffzellen, die im ersten Schritt initialisiert wurden, durch Anlegen eines Wechselfeldes an die jeweiligen Steuerelektroden S1 und S2 zum Leuchten gebracht. Dieses Wechselfeld und die vorher erzeugte Oberflächenladung sorgen dafür, dass das in der Leuchtstoffzelle befindliche Gas in den Plasmazustand übergeht. Dadurch wird UV-Licht erzeugt, das die jeweilige Leuchtstoff- bzw. Phosphorschicht zum Leuchten bringt.

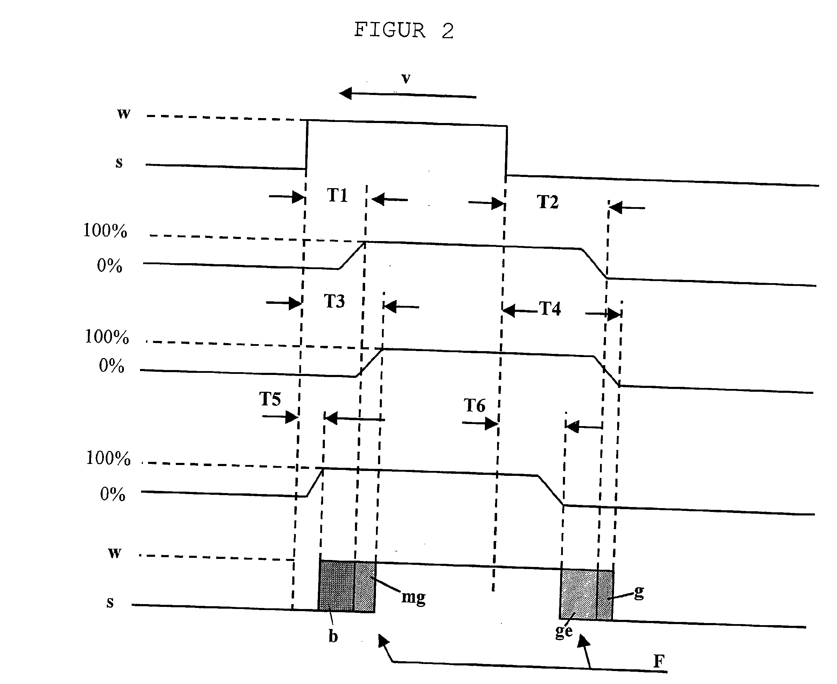

Ein Problem bekannter Plasmadisplays besteht darin, dass die verschiedenfarbigen Leuchtstoffe unterschiedliche Anstiegs- und Abfallzeiten aufweisen, was beim Vorliegen bewegter Bilder zu Farbsäumen führt. Dies wird anhand der Figur 2 erläutert, die Skizzen zur Veranschaulichung der unterschiedlichen Anstiegs- und Abfallzeiten der Leuchtstoffe eines Plasmadisplays zeigt.

In der ersten Zeile dieser Figur 2 ist das Eingangssignal des Displays gezeigt, welches einen Schwarz-/Weiß-Übergang im Sinne einer ansteigenden Flanke und einen Weiß-/Schwarz-Übergang im Sinne einer abfallenden Flanke aufweist. Dieses Eingangssignal ist aus einer bewegten Bildszene abgeleitet, wobei die Bewegungsrichtung durch den Pfeil v veranschaulicht ist.

In der zweiten, dritten und vierten Zeile der Figur 2 ist das Verhalten der verschiedenfarbigen Leuchtstoffe gezeigt. Die Zeitdauer zwischen dem Auftreten des Schwarz-/Weiß-Überganges des Eingangssignals und dem Leuchtbeginn der roten Farbstoffzelle R ist mit T1 und die Zeitdauer zwischen dem Auftreten des Weiß-/Schwarz-Überganges des Eingangssignals und dem Leuchtende der roten Farbstoffzelle R ist mit T2 bezeichnet.

Die Zeitdauer zwischen dem Auftreten des Schwarz-/Weiß-Überganges des Eingangssignals und dem Leuchtbeginn der grünen Farbstoffzelle G ist mit T3 und die Zeitdauer zwischen dem Auftreten des Weiß-/Schwarz-Überganges des Eingangssignals und dem Leuchtende der grünen Farbstoffzelle G ist mit T4 bezeichnet.

Die Zeitdauer zwischen dem Auftreten des Schwarz-/Weiß-Überganges des Eingangssignals und dem Leuchtbeginn der blauen Farbstoffzelle B ist mit T5 und die Zeitdauer zwischen dem Auftreten des Weiß-/Schwarz-Überganges des Eingangssignals und dem Leuchtende der blauen Farbstoffzelle B ist mit T6 bezeichnet.

Das auf dem Display dargestellte Videosignal, welches durch eine vom menschlichen Auge vorgenommene Überlagerung des in den Leuchtstoffzellen erzeugten Lichts gebildet wird, ist in der fünften Zeile der Figur 2 gezeigt. Das dort dargestellte Videosignal weist Farbsäume in den Farben blau, magenta, gelb und grün auf.

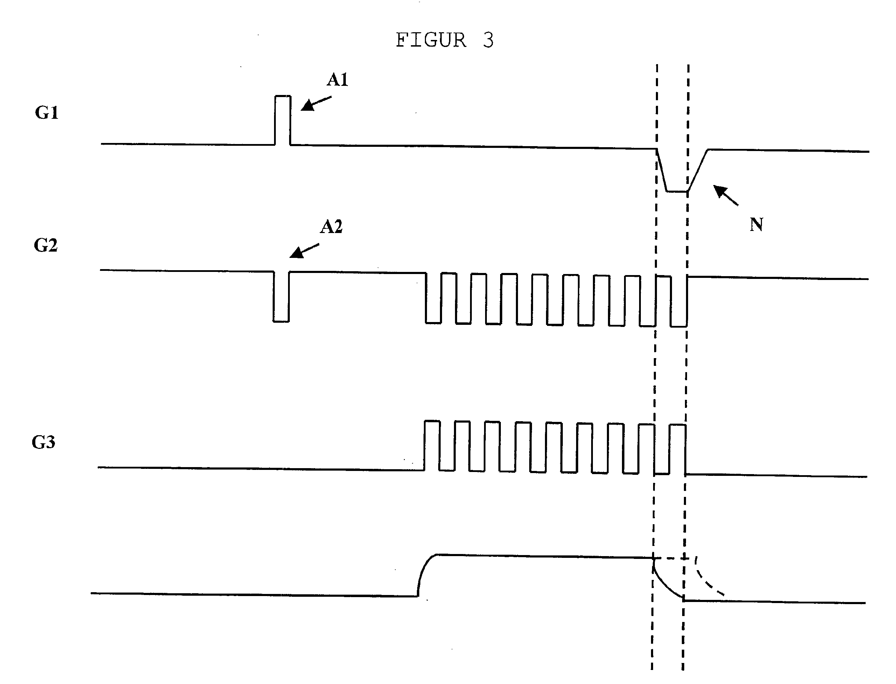

Das Auftreten derartigen Farbsäume wird gemäß der vorliegenden Erfindung durch eine im Vergleich zu bekannten Plasmadisplays veränderte Ansteuerung vermieden. Dies wird nachfolgend anhand der Figur 3 veranschaulicht; welche ein Zeitdiagramm zur Erläuterung der erfindungsgemäßen Ansteuerung einer Leuchtstoffzelle zeigt, beispielsweise der in der Figur 1 gezeigten Leuchtstoffzelle G.

In einem ersten Schritt wird die anzusteuernde Leuchtstoffzelle initialisiert. Dies geschieht durch Adressimpulse A1 und A2, die zeitgleich an die Adresselektroden G1 und G2 der grünen Leuchtstoffzelle angelegt werden. In einem zweiten Schritt wird zum Herbeiführen des Leuchtens der Leuchtstoffzelle G an die Steuerelektrode G2 und G3 jeweils ein aus mehreren Impulsen bestehendes Steuersignal angelegt, wie aus der zweiten und dritten Zeile von Figur 3 hervorgeht.

Um die Leuchtdauer der grünen Leuchtstoffzelle G, die die längste Abfallzeit aufweist, zu verringern, wird - wie aus der ersten Zeile von Figur 3 ersichtlich ist - eine dritte Spannung in Form eines Neutralisierungsimpulses N an die Adresselektrode G1 der grünen Leuchtstoffzelle G angelegt. Aufgrund dieses Neutralisierungsimpulses wird - wie aus der durchgezogenen hinteren Flanke in der vierten Zeile von Figur 3 hervorgeht - die Leuchtdauer der grünen Leuchtstoffzelle verkürzt, obwohl - wie aus der zweiten und dritten Zeile von Figur 3 hervorgeht - nach wie vor Steuerimpulse an den Steuerelektroden der grünen Leuchtstoffzelle angelegt sind.

Die gestrichelt gezeichnete hintere Flanke in der vierten Zeile von Figur 3 veranschaulicht das Ende der Leuchtdauer der grünen Leuchtstoffzelle G, wenn der vorstehend genannte Neutralisierungsimpuls N nicht an die Adresselektrode G1 der grünen Leuchtstoffzelle angelegt worden wäre.

Durch diese grundsätzliche Vorgehensweise können die Leuchtzeitintervalle der verschiedenfarbigen Leuchtstoffzellen in Übereinstimmung gebracht werden, so dass bei einer Darstellung von bewegten Bildszenen auf einem Plasmadisplay keine Farbsäume mehr auftreten. Die Zeitpunkte der Erzeugung der notwendigen Neutralisierungsimpulse und deren Impulsdauern kann vom Hersteller eines Plasmadisplays im Rahmen von Voruntersuchungen ermittelt und in geeigneter Weise in der Ansteuerelektronik hinterlegt werden.

## Patentansprüche

1. Verfahren zur Kompensation der unterschiedlichen Anstiegs- und Abfallzeiten der Leuchtstoffe in einem Plasmadisplay, welches eine Vielzahl von matrixförmig angeordneten Bildpunkten aufweist, wobei jedem Bildpunkt eine grüne, eine rote und eine blaue Leuchtstoffzelle zugeordnet ist und ein Leuchten eines Bildpunktes dadurch herbeigeführt wird, dass
- in einem ersten Schritt die dem Bildpunkt zugeordneten Leuchtstoffzellen jeweils durch Anlegen einer ersten Spannung an die Adresselektroden der Leuchtstoffzellen initialisiert und
- in einem zweiten Schritt die Leuchtstoffzellen jeweils durch Anlegen einer zweiten Spannung an die Steuerelektroden der Leuchtstoffzellen zum Leuchten gebracht werden,
**dadurch gekennzeichnet, dass**
- die Leuchtzeitintervalle der Leuchtstoffzellen durch Anlegen von dritten Spannungen an die Adresselektroden von Leuchtstoffzellen nahezu in Übereinstimmung gebracht werden.

2. Verfahren Anspruch 1,
**dadurch gekennzeichnet, dass**
die erste Spannung ein Adressierungsimpuls ist.

3. Verfahren Anspruch 1 oder 2,
**dadurch gekennzeichnet, dass**
die zweite Spannung mehrere aufeinanderfolgende Spannungsimpulse enthält.

4. Verfahren nach einem der vorhergehenden Ansprüche,
**dadurch gekennzeichnet, dass**
die dritten Spannungen Neutralisierungsimpulse sind.

5. Vorrichtung zur Kompensation der unterschiedlichen Anstiegs- und Abfallzeiten der Leuchtstoffe in einem Plasmadisplay, welches eine Vielzahl von matrixförmig angeordneten Bildpunkten aufweist, wobei jedem Bildpunkt eine grüne, eine rote und eine blaue Leuchtstoffzelle zugeordnet ist, die Leuchtstoffzellen jeweils Adresselektroden und Steuerelektroden aufweisen und eine Ansteuerelektronik vorgesehen ist, die zur Erzeugung von ersten Spannungen für die Adresselektroden und zur Erzeugung von zweiten Spannungen für die Steuerelektroden dient,
**dadurch gekennzeichnet, dass**
die Ansteuerelektronik (S, T_{R}, T_{G}, T_{B}, T₁, T₂) weiterhin zur Erzeugung von dritten Spannungen (N) für die Adresselektroden (R1, G1, B1) vorgesehen ist, wobei die dritten Spannungen vorgesehen sind, um die Leuchtzeitintervalle der Leuchtstoffzellen (R, G, B) in Übereinstimmung zu bringen.

6. Vorrichtung nach Anspruch 5,
**dadurch gekennzeichnet, dass**
die Ansteuerelektronik zur Erzeugung von ersten Spannungen für die Adresselektroden vorgesehen ist, bei welchen es sich um Adressierungsimpulse handelt.

7. Vorrichtung nach Anspruch 5 oder 6,
**dadurch gekennzeichnet, dass**
die Ansteuerelektronik zur Erzeugung von zweiten Spannungen für die Steuerelektroden vorgesehen ist, bei welchen es sich jeweils um aufeinanderfolgende Spannungsimpulse handelt.

8. Vorrichtung nach einem der Ansprüche 5 - 7,
**dadurch gekennzeichnet, dass**
die dritten Spannungen Neutralisierungsimpulse (N) sind.
